# EUROPÄISCHE PATENTSCHRIFT

(11) **EP 3 214 311 B1**
(45) Veröffentlichungstag und Bekanntmachung des Hinweises auf die Patenterteilung: **20.02.2019**
(21) Anmeldenummer: 16207024.7
(22) Anmeldetag: 27.12.2016
(51) Int. Cl.: F04C 2/16, F04C 2/12, F04C 15/00, F16J 15/34

(54) **ROTIERENDE PUMPE UND SICHERUNGSBLECH**
ROTARY PUMP AND SAFETY SHEET
POMPE ROTATIVE ET RONDELLE D'ARRÊT

(30) Priorität: 20.01.2016 DE 102016100959
(43) Veröffentlichungstag der Anmeldung: 06.09.2017
(73) Patentinhaber: FRISTAM Pumpen Schaumburg GmbH, 21033 Hamburg (DE)
(72) Erfinder: Hahn, Torben, 31737 Rinteln (DE); Linck, René, 31675 Bückeburg (DE); Steinig, Benjamin, 31559 Haste (DE)
(74) Vertreter: Noack, Andreas

(56) Entgegenhaltungen:
- EP-A1- 1 788 290
- WO-A1-99/09340
- WO-A1-2013/120483

## Beschreibung

Die Erfindung betrifft eine rotierende Pumpe mit wenigstens einem angetriebenen Förderelement, welches in einem vom zu fördernden Produkt durchströmten Produktraum angeordnet ist und mittels einer von außen in den Produktraum hineinragenden Welle angetrieben wird, wobei die Welle gegen eine Wandung des Produktraums abgedichtet ist, und wobei die Abdichtung als produktseitig zu montierende Gleitringdichtung mit außen liegender formschlüssiger Lagesicherung ausgeführt ist. Entsprechend aufgebaute Pumpen sind sowohl als Strömungspumpen als auch als Verdrängerpumpen bekannt.

Eine bekannte Maßnahme zur Abdichtung der Welle gegen die Wandung ist z.B. die Verwendung von Wellendichtringen. Diese sind aber nur bedingt zuverlässig und kommen insbesondere dann nicht in Frage, wenn die Art des zu fördernden Produkts eine besonders sichere Dichtung erfordert, wie z.B. bei der Förderung giftiger Stoffe oder im hygienischen Bereich, z.B. in der Lebensmittel- und oder Kosmetikindustrie.

In diesen Bereichen hat sich die Verwendung von Gleitringdichtungen durchgesetzt, welche eine sehr gute Abdichtung gewährleisten. Dies wird allerdings durch einen komplexen Aufbau der Dichtung erkauft. Die Dichtung weist in der Regel wenigstens einen mit der Welle verbundenen rotierenden Abschnitt und einen in der Wandung montierten stationären Abschnitt auf.

Für eine sichere Funktion der Dichtung muss der stationäre Abschnitt axial und gegen Verdrehen gesichert werden. Hierbei muss die axiale Sicherung auch ein Verschieben der Gleitringdichtung in Richtung des Produktraums verhindern, da sonst die Funktion der Dichtung bei einem Unterdruck im Produktraum nicht gewährleistet ist. Dazu weist dieser Abschnitt gewöhnlich einen Flansch oder eine Aufnahme auf, welche in der Wandung kraft- und/oder formschlüssig fixiert werden, beispielsweise durch Verschrauben mit mehreren Schrauben oder durch Einschrumpfen.

In vielen Fällen, insbesondere bei Pumpen für hygienische Produkte wie Nahrungsmittel oder Kosmetika, ist es nicht erwünscht oder schlichtweg nicht möglich, einen Flansch oder eine Aufnahme im Produktraum anzuordnen, da hierdurch die Produktströmung beeinträchtigt wird und die entsprechenden Konturen schwer zu reinigen sind. Daher muss die Montage des Flansches von außerhalb des Produktraums erfolgen. Dies ist aus verschiedenen Gründen nachteilig.

Zur Montage des Flansches muss die Welle komplett aus dem Produktraum herausgezogen werden. Dies erfordert bei vielen Pumpen eine komplette Trennung des Produktraums und des Pumpenantriebs. Da gleichzeitig die Montage des rotierenden Abschnitts der Gleitringdichtung immer nur von der Produktseite her erfolgen kann, ist der Austausch oder die Wartung der Dichtung sehr aufwändig. Zudem besteht bei der Zusammenführung des Produktraums mit montiertem stationären Abschnitt der Dichtung und dem Pumpenantrieb die Gefahr, dass die Dichtung durch unkontrollierte Berührungen mit der Welle beschädigt wird.

Aus der Patentanmeldung WO 2013/120483 ist eine Drehkolbenpumpe mit einer Gleitringdichtung bekannt, welche eine außen liegende Lagesicherung aufweist. Diese verhindert sowohl ein Verdrehen der Dichtung als auch eine axiale Bewegung der Dichtung in einer Richtung vom Produktraum weg.

Die Patentanmeldung EP1788290A1 offenbart eine zweistufig aufgebaute Gleitringdichtung zur Abdichtung einer Wellendurchführung in einem Gehäuse.

Es ergibt sich daher die Aufgabe, den Aufbau von Pumpen insbesondere hinsichtlich der genannten Probleme zu verbessern.

Diese Aufgabe wird gemäß eines Aspekts der Erfindung gelöst durch eine rotierende Pumpe mit wenigstens einem angetriebenen Förderelement, welches in einem vom zu fördernden Produkt durchströmten Produktraum angeordnet ist und mittels einer von außen in den Produktraum hineinragenden Welle angetrieben wird, wobei die Welle gegen eine Wandung des Produktraums abgedichtet ist, und wobei die Abdichtung als produktseitig zu montierende Gleitringdichtung mit außen liegender formschlüssiger Lagesicherung ausgeführt ist, welche dadurch weitergebildet ist, dass die Lagesicherung eingerichtet ist, um ein Verdrehen der Gleitringdichtung sowie ein Verschieben der Gleitringdichtung in Richtung des Produktraums zu verhindern. Als außen liegend ist dabei im Sinne der Erfindung zu verstehen, dass die Lagesicherung der Gleitringdichtung außerhalb des Produktraums erfolgt.

Durch den vorgeschlagenen Aufbau wird die Montage und Wartung der Dichtung wesentlich vereinfacht. Die Dichtung kann ohne Trennung des Produktraums und des Pumpenantriebs vom Produktraum her über die Welle in die Wandung eingesetzt werden.

Für eine besonders hochwertige Abdichtung weist die Gleitringdichtung gemäß einer Ausgestaltung der Erfindung einen ersten rotierenden Abschnitt, einen zweiten rotierenden Abschnitt sowie einen stationären Abschnitt auf. Gemäß einer bevorzugten Weiterbildung der Erfindung umfasst der stationäre Abschnitt eine Hülse, welche in einen Dichtungssitz in der Wandung eingesetzt ist.

Wenn gemäß einer weiteren Ausführung der Erfindung die Hülse auf der vom Produktraum abgewandten Seite aus der Wandung herausragt, kann die Lagesicherung besonders einfach gestaltet werden. Hierfür weist die Hülse gemäß einer Ausführung an dem aus der Wandung herausragenden Abschnitt eine umlaufende Nut auf.

Gemäß einer weiteren bevorzugten Ausführungsform der Erfindung ist die Lagesicherung als Sicherungsblech ausgeführt, welches die Hülse seitlich umgreift und dabei in die Nut eingreift. Hierdurch wird eine axiale Bewegung der Hülse in dem Dichtungssitz sicher und auf einfache Weise verhindert.

Für eine besonders wirksame Sicherung greift das Sicherungsblech auf einem Umfangswinkel von mehr als 180° in die Nut ein. Bevorzugt weist das Sicherungsblech dazu seitliche Finger auf, welche beim Umgreifen der Hülse zunächst elastisch nach außen gebogen werden und anschließend in Richtung ihrer Ruhelage zurückfedern.

In einer Weiterbildung der Erfindung weist die Hülse eine an die Nut angrenzende Ausfräsung auf. Das Sicherungsblech weist vorzugsweise einen Vorsprung aufweist, welcher als Drehsicherung in die Ausfräsung eingreift. Durch diese Ausgestaltung erfüllt das Sicherungsblech gleichzeitig eine Funktion als axiale Sicherung und als Drehsicherung für die Hülse.

Gemäß einer Weiterbildung der Erfindung ist das Sicherungsblech in einem Leckageraum zwischen dem Produktraum und einem Antriebsabschnitt der Pumpe angeordnet ist, und das Sicherungsblech ist an einem nicht mit der Hülse zusammenwirkenden Ende umgebogen, um einen Eingreifschutz für den Leckageraum bereitzustellen.

Das Sicherungsblech ist vorzugsweise durch eine oder mehrere Sicherungsschrauben fixiert.

Gemäß eines weiteren Aspekts der Erfindung wird die Aufgabe weiterhin gelöst durch ein Sicherungsblech einer Pumpe, welches gemäß der oben genannten Ausführungen gestaltet ist. Bezüglich der Vorteile und Wirkungen des erfindungsgemäßen Sicherungsblechs wird ausdrücklich auf die vorangegangenen Erläuterungen verwiesen.

Die Erfindung wird im Folgenden anhand einiger beispielhafter Zeichnungen erläutert. Es zeigen:
Figur 1: eine Pumpe in perspektivischer Darstellung,
Figur 2: eine horizontale Schnittdarstellung einer Pumpe gemäß Fig. 1,
Figur 3: eine vertikale Schnittdarstellung einer Pumpe gemäß Fig.1, 5
Figur 4: einen horizontalen Schnitt durch die Abdichtung des Produktabschnitts einer Pumpe gemäß eines Aspekts der Erfindung,
Figur 5: ein Sicherungsblech einer Pumpe gemäß eines weiteren Aspekts der Erfindung.

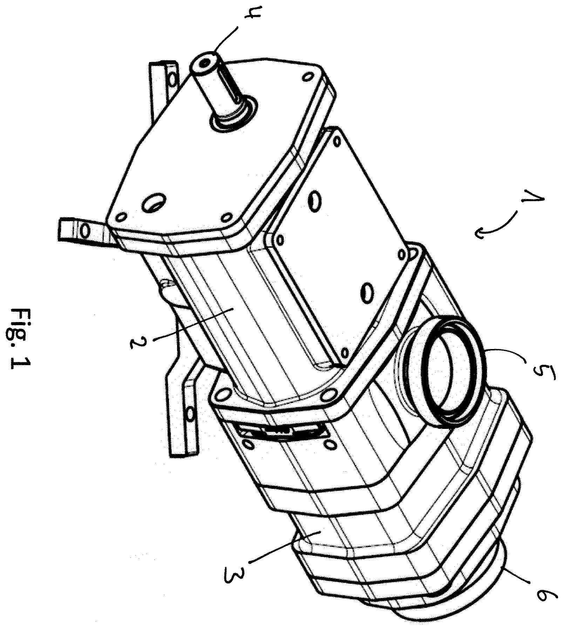

Figur 1 zeigt eine Pumpe 1 in perspektivischer Darstellung, welche im Wesentlichen aus einem Antriebabschnitt 2 und einem Produktabschnitt 3 besteht. Im dargestellten Beispiel handelt es sich um eine hygienische einflutige Schraubenspindelpumpe.

Der Antriebsabschnitt 2 der Pumpe 1 weist einen Antriebswellenzapfen 4 auf, mit welchem die Pumpe 1 an einen nicht dargestellten Antriebsmotor gekoppelt werden kann. Der Produktabschnitt 3 der Pumpe 1 weist einen Produktzufluss 5 und eine Produktabfluss 6 auf. Bei reversiblem Betrieb der Pumpe 1 können dabei Produktzufluss 5 und Produktabfluss 6 in Abhängigkeit von der Förderrichtung vertauscht sein.

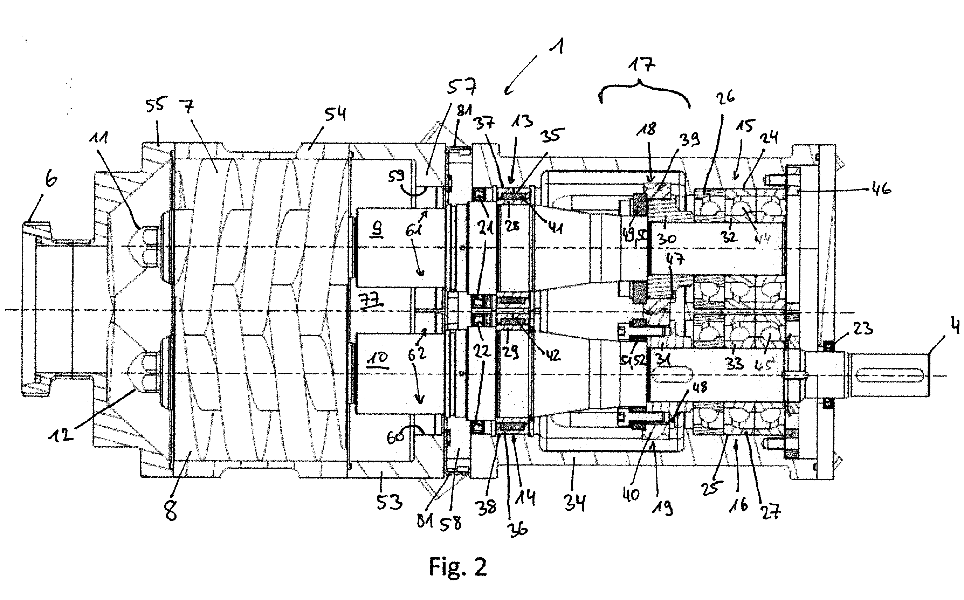

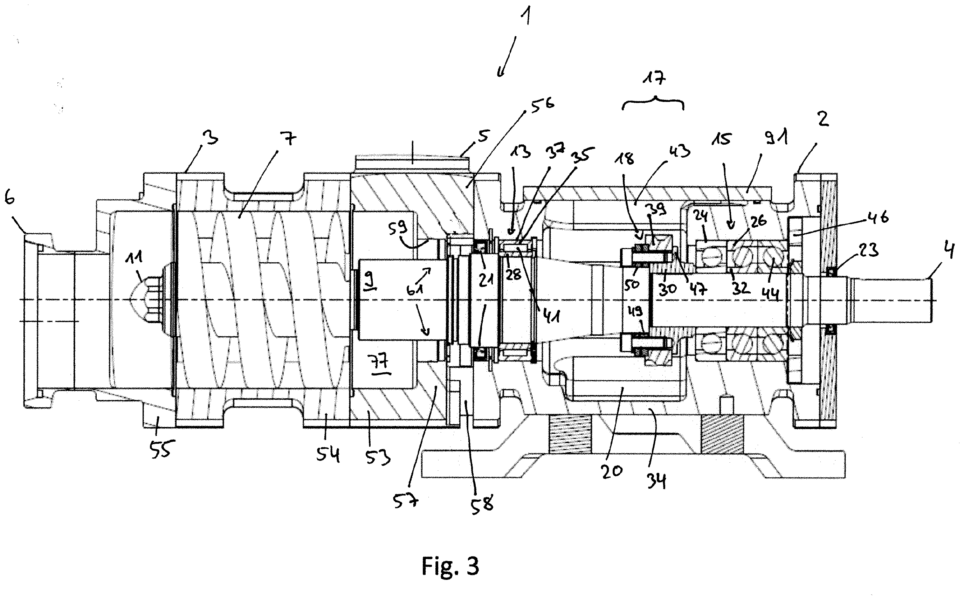

Der innere Aufbau der Pumpe 1 ist in den Figuren 2 und 3 dargestellt. Im Produktabschnitt 3 sind als Förderelemente zwei ineinandergreifende Verdrängerschrauben 7,8 angeordnet, welche von zwei parallelen Wellen 9,10 angetrieben werden. Die Verdrängerschrauben 7,8 sind auf die Wellen 9,10 aufgesteckt und formschlüssig lösbar an diesen befestigt, im dargestellten Beispiel mittels der Verschraubungen 11,12.

Die Wellen 9,10, erstrecken sich aus dem Produktabschnitt 3 in den Antriebsabschnitt 2, wo sie zunächst durch radial wirkende Nadellager 13,14 und durch radial und axial wirkende Schrägkugellager 15,16 gelagert sind. Die Schrägkugellager 15,16 bestehen im dargestellten Beispiel aus jeweils drei hintereinander angeordneten Lagern, welche der Übersichtlichkeit halber als ein Lager beschrieben werden. Zwischen den Lagern 13,14 und 15,16 ist ein Synchrongetriebe 17 mit ineinander kämmenden Ritzeln 18,19 angeordnet. Das Synchrongetriebe 17 überträgt die über den Antriebswellenzapfen 4 in die Welle 10 eingeprägte Bewegung auf die Welle 9, so dass sich die Verdrängerschrauben 7 und 8 synchron gegensinnig drehen.

An die Lager 13,14,15,16 und das Synchrongetriebe 17 einer einflutigen Schraubenspindelpumpe 1 sind besonders hohe Anforderungen zu stellen. Die Verdrängerschrauben 7,8 greifen berührungslos mit minimalem Spalt ineinander, um einen hohen Wirkungsgrad zu erreichen. Um eine Berührung der Verdrängerschrauben 7,8 zu vermeiden, durch welche diese zerstört werden können, müssen daher sowohl das Synchrongetriebe 17 als auch die Lagerung extrem steif und spielarm sein. Zudem wirken durch den einflutigen Aufbau insbesondere bei hohen Förderraten und hochviskosen bzw. pastösen Produkten hohe Axialkräfte auf die Wellen 9,10, welche durch die Schrägkugellager 15,16 aufgenommen werden müssen.

Um die hohen Belastungen aushalten zu können müssen die Lager 13,14,15,16 ständig gekühlt werden. Dazu ist im Antriebsabschnitt 2 der Pumpe 1 ein Ölbad 20 vorgesehen. Die Ritzel 18,19 tauchen dabei in einen Ölsumpf ein und erzeugen in dem Antriebsabschnitt 2 einen Ölnebel, welcher in die Lager 13,14,15,16 eintritt und diese gleichzeitig schmiert und kühlt.

Die Wellen 9,10 sind am produktseitigen Ende des Antriebsabschnitts 2 durch Wellendichtringe 21,22 abgedichtet, um einen Austritt von Öl aus dem Antriebsabschnitt 2 zu verhindern. Ein weiterer Wellendichtring 23 ist zur Abdichtung des Antriebswellenzapfens 4 vorgesehen.

Bei der Montage der Pumpe 1 ergibt sich die Schwierigkeit, dass der Durchmesser der Ritzel 18,19 funktionsbedingt größer ist als der Achsabstand der Wellen 9,10, während der Durchmesser der Aufnahmebohrungen 24,25 für die Außenringe 26,27 der Schrägkugellager 15,16 kleiner als der Achsabstand der Wellen 9,10 sein muss. Die Wellen 9,10 lassen sich somit nicht mit montierten Ritzeln 18,19 durch die Aufnahmebohrungen 24,25 in den Antriebsabschnitt 2 der Pumpe 1 einführen.

Daher erfolgt die Montage wie folgt: Auf die Wellen 9,10 werden vor der Montage die Innenringe 28,29 der Nadellager 13,14, Tragkörper 30,31 für die Ritzel 18,19 sowie die Schrägkugellager 15,16 montiert. Dabzu werden die Innenringe 28,29 der Nadellager 13,14 sowie die Schrägkugellager 15,16 auf die Wellen 9,10 aufgeschrumpft, während die Tragkörper 30,31 durch nicht dargestellte Passfederverbindungen auf den Wellen 9,10 fixiert werden.

In dem Gehäuse 34 des Antriebsabschnitts 2 werden die Außenringe 35,36 der Nadellager 13,14 mit den dazugehörigen Nadelkäfigen 41,42 in entsprechenden Aufnahmebohrungen 37,38 fixiert.

Die auf den Wellen 9,10 montierten Teile 28,29,30,31,15,16 sind so bemessen, dass ihre Außendurchmesser alle kleiner sind als der Achsabstand der Wellen 9,10, so dass die vormontierten Wellen durch die Aufnahmebohrungen 24,25 in Richtung des Produktabschnitts 3 in den Antriebsabschnitt 2 eingeschoben werden können. Dabei werden die Zahnkränze 39,40 durch eine Montageöffnung 43 des Gehäuses während des Einschiebens über die Wellen 9,10 geführt.

Zum axialen Fixieren der Wellen 9,10 und der Schrägkugellager 15,16 werden dann ein oder mehrere Fixierbleche 46 aufgeschraubt.

Nachdem die Wellen 9,10 durch Fixieren der Schrägkugellager 15,16 axial spielfrei gelagert sind, wird im nächsten Schritt das Synchrongetriebe 17 fertig montiert. Dazu werden die Zahnkränze 39,40, die schon beim Einschieben der Wellen 9,10 lose über diese gelegt wurden, auf die Tragkörper 30,31 geschoben, wo sie mit enger Passung aufsitzen und miteinander kämmen. Dazu weisen die Tragkörper 30,31 auf der vom Produktabschnitt 3 abgewandten Seite Anschlagschultern 47,48 auf. Von der dem Produktabschnitt 3 zugewandten Seite werden dann Klemmbleche 49,50,51,52 gegen die Zahnkränze 39,40 gesetzt. Die Klemmbleche 49,50,51,52 sind jeweils etwa halbringförmig ausgeführt und weise endseitige Stufen auf, so dass jeweils zwei Klemmbleche zu einem bündigen Ring zusammengesetzt werden können. Die zusammengesetzten Ringe werden dann mittels Schrauben an den Tragkörpern 30,31 befestigt und pressen die Zahnkränze 39,40 gegen die Anschlagschultern 47,48, wodurch diese kraftschlüssig fixiert werden.

Dadurch, dass die Aufnahmebohrungen 24,25 der Schrägkugellager 15,16 und die Aufnahmebohrungen 35,36 der Nadellager 13,14 koaxial in das einteilig gefertigte Gehäuse 34 eingebracht werden können, ist die Fertigung mit sehr geringem Spiel möglich, wobei insbesondere die Gefahr eines radialen Versatzes der einzelnen Aufnahmebohrungen 24,25,35,36 zueinander 45 reduziert ist.

An den Antriebsabschnitt 2 der Pumpe schließt sich der Produktabschnitt 3 an, welcher aus einem Zwischenflansch 53 mit Produktzufluss 5, einem Fördergehäuse 54 und einem Abschlussflansch 55 mit Produktabfluss 6 aufgebaut ist. Der Zwischenflansch 53 stützt sich mit einem Ansatzkragen 56 am Gehäuse 34 des Antriebsabschnitts 2 ab, so dass sich zwischen diesem und einer antriebsseitigen Wandung 57 ein Leckageraum 58 bildet. Durch diesen Leckageraum 58 ist sichergestellt, dass Öl aus dem Antriebsabschnitt 2 bei Versagen eines der Wellendichtringe 21,22 aus der Pumpe austreten kann, ohne das geförderte Produkt zu kontaminieren, was insbesondere beim Einsatz der Pumpe im Hygienebereich, wie z.B. in der Lebensmittel- oder Kosmetikindustrie, von elementarer Bedeutung ist.

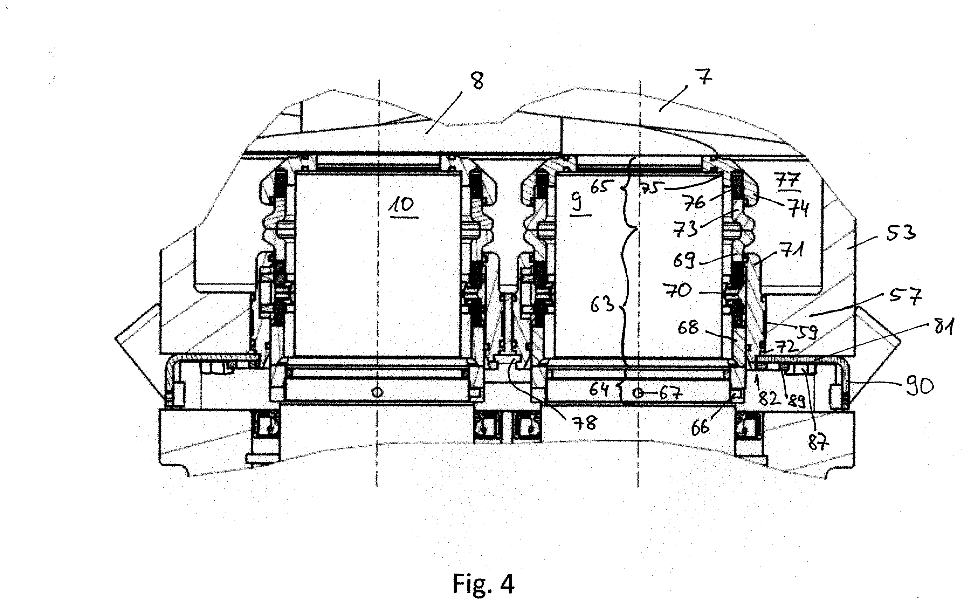

Die Wellen 9,10 ragen durch Dichungssitze 59,60 in der Wandung 57 in den Produktbereich und werden beim Durchtritt durch die Wandung 57 durch Gleitringdichtungen 61,62 abgedichtet, welche der Übersichtlichkeit halber in den Figuren 2 und 3 nicht dargestellt sind. Der Aufbau dieser Dichtungen wird im Folgenden anhand der Figur 4 näher erläutert.

Die Gleitringdichtungen 61,62 sind identisch aufgebaut, weswegen hier nur die Gleitringdichtung 61 beschreiben wird. Alle Angaben gelten gleichermaßen auch für die Gleitringdichtung 62.

Die Gleitringdichtung 61 ist zweistufig aufgebaut und weist daher einen stationären Abschnitt 63 sowie zwei rotierende Abschnitte 64,65 auf. Der erste rotierende Abschnitt 64 sitzt antriebsseitig auf der Welle 9 und wird durch in die Welle 9 eingeschraubte Stifte 66,67 axial und rotatorisch gehalten. Der stationäre Abschnitt 63 besteht aus zwei Gleitringen 68,69, welche sich durch einen Federring 70 aneinander abstützen. Die Einheit aus den beiden Gleitringen 68,69 und dem Federring 70 sind in einer Hülse 71 eingefasst, welche in den Dichtsitz 59 eingesetzt ist und sich hier axial an einem Vorsprung 72 abstützt.

Der zweite rotierende Abschnitt 65 besteht wiederum aus einem Gleitring 73, welcher in einem Topf 74 gefasst ist, welcher auf eine Stufe 75 der Welle 9 aufgesetzt ist und dort durch die Verdrängerschraube 7 festgeklemmt wird. In den Topf 74 sind Mitnehmer 76 eingeschraubt, welche ein Verdrehen des Gleitrings 73 gegenüber dem Topf 74 verhindern.

Durch die Kraft des Federrings 70 wird der Gleitring 68 gegen den rotierenden Abschnitt 64 und der Gleitring 69 gegen den Gleitring 73 gedrückt, wodurch diese eng aneinander anliegen und den Produktraum 77 gegen den Leckageraum 58 abdichten. Dabei sind insbesondere die Gleitringe 69 und 73 aus produktverträglichem und verschleißarmen Material gefertigt.

Der Zwischenraum zwischen den Gleitringen 68,69,73 und der Welle 9 wird durch eine produktverträgliche Flüssigkeit gespült, bei der es sich z.B. um destilliertes Wasser handeln kann. Dies dient der Kühlung der Gleitringe und dem Abtransport ggf. zwischen den Gleitringen durchtretender Produktbestandteile. Zu- und Abtransport der Flüssigkeit erfolgt über Kanäle in der Wandung 57, welche der Übersichtlichkeit halber nicht dargestellt sind.

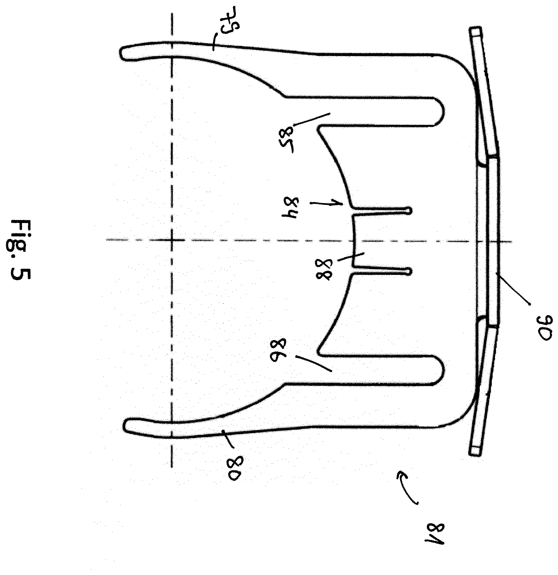

Im Betrieb der Pumpe 1 kann es dazu kommen, dass in dem Produktraum 77 Unterdruck herrscht. Um zu verhindern, dass sie Hülse 71 durch den Umgebungsdruck in den Produktraum 77 gedrückt wird, wodurch schlimmstenfalls Verunreinigungen in das Produkt gelangen können, ragt die Hülse 71 45 antriebsseitig über die Wandung 57 hinaus und weist dort eine umlaufende Nut 78 auf. In diese Nut 78 greifen Finger 79,80 (Fig. 5) eines von außen in den Leckageraum 58 eingeschobenen Sicherungsblechs 81 ein. Dadurch wird die Hülse 71 axial arretiert, so dass sie nicht in den Produktraum gedrückt werden kann. An einer Stelle weist die Nut 78 eine axiale Ausfräsung 82 auf, welche mit einem Vorsprung des Sicherungsblechs 81 zusammenwirkt, um die Hülse 71 gegen Verdrehen zu sichern.

Das Sicherungsblech 81 ist in der Figur 5 näher dargestellt. Das Sicherungsblech weist zwei außen liegende Finger 79,80 und einen mittleren Steg 84 auf, welche in der Kontur dem Nutgrund der Nut 78 angepasst sind. Insgesamt umfassen diese einen Winkel von etwas mehr als 180°, so dass die Finger 79,80 beim Einschieben des Sicherungsblechs 81 elastisch nach außen gebogen werden und dann in ihre Ausgangslage zurückfedern. Die elastische Verformung wird durch Langlöcher 85,86 unterstützt, welche beim Einschieben des Sicherungsblechs über Sicherungsschrauben 87 (Fig. 4) greifen. In der Mitte des Stegs 84 ist eine kleine Lasche 88 vorgesehen, welche zum Bilden des Vorsprungs genutzt wird. Dazu kann, wie in Fig. 4 dargestellt, eine kleines Blech 89 auf der Lasche 88 befestigt werden, z.B. durch Punktschweißen. Alternativ kann die Lasche 88 selbst etwas aus der Ebene des Sicherungsblechs 81 gebogen oder gebördelt werden, um den Vorsprung zu bilden.

Am freien Ende des Sicherungsblechs 81 ist ein schmaler Streifen um etwa 90° umgebogen und fungiert somit als Eingreifschutz 90 für den Leckageraum 58. Dabei verbleibt ein ausreichender Spalt, um die Sicherungsschrauben 87 nach dem Einschub des Sicherungsblechs 81 mit einem Schlüssel festzuziehen und somit das Sicherungsblech 81 zu fixieren.

Die Montage und Demontage der Gleitringdichtungen 61,62 ist besonders einfach und erfolgt bei demontiertem Abschlussflansch 55 von der Produktseite her.

Der rotierende Abschnitt 64 wird von der Produktseite her auf die Welle geführt und bis auf die Stifte 66,67 geschoben, welche schon vor der Montage des Antriebsabschnitts 2 in Gewindebohrungen der Wellen 9,10 eingeschraubt werden. Dann wird der stationäre Abschnitt 63 mit den Gleitringen 68,69, dem Federring 70, und der Hülse 71 über die Welle 9 geführt und bis in den Dichtungssitz 59 geschoben, wobei die Hülse 71 bis zu der umlaufenden Nut 78 antriebsseitig aus der Wandung 57 hervorragt. Als nächstes wird das Sicherungsblech 81 in den Leckageraum 58 eingeschoben, so dass die Finger 79,80 und der Steg 84 in die Nut 78 eingreifen. Die Hülse wird dabei so ausgerichtet dass der Vorsprung in die Ausfräsung 82 eingreift und so die Hülse gegen Verdrehen sichert. Nach vollständigem Einschieben des Sicherungsblechs werden die Sicherungsschrauben 87 angezogen um das Sicherungsblech zu fixieren.

Abschließend wird der rotierende Abschnitt 65 mit dem Topf 74 und dem Gleitring 73 bis zu der Stufe 75 auf die Welle 9 geschoben. Durch montieren der Verdrängerschrauben 7,8 werden die Gleitringdichtungen 61,62 fixiert.

Bei der Montage der Verdrängerschrauben 7,8 werden diese bevorzugt vor dem Aufschieben auf die Wellen 9,10 zueinander ausgerichtet, so dass die entsprechenden Gewindegänge ineinandergreifen. Die Verdrängerschrauben 7,8 und die produktseitigen Enden der Wellen 9,10 weisen formkomplementäre Passelemente auf, so dass ein Verdrehen der Verdrängerschrauben 7,8 auf den Wellen 9,10 ausgeschlossen ist. Der Formschluss wird durch die Verschraubungen 11,12 zusätzlich gesichert.

Da die Verdrängerschrauben 7,8 durch den Formschluss nur in diskreten Winkelpositionen auf den Wellen 9,10 aufgesetzt werden können ist es erforderlich, die Wellen 9,10 gegeneinander zu verdrehen, um eine optimale berührungslose Ausrichtung der Verdrängerschrauben 7,8 zueinander einzustellen. Diese ist wichtig um einen vorzeitigen Verschleiß der Verdrängerschrauben 7,8 zu vermeiden.

Dazu werden durch die Montageöffnung 43 die Klemmbleche 49,50 für den Zahnkranz 39 etwas gelockert, so dass sich der Zahnkranz 39 auf dem Tragkörper 30 verdrehen kann. Dann wird der Spalt zwischen den Verdrängerschrauben 7,8 durch Verdrehen eingestellt. Bei korrekter Lage der Verdrängerschrauben 7,8 zueinander werden die Klemmbleche 49,50 wieder angezogen, so dass der Zahnkranz 39 wieder drehfest fixiert ist.

Nach der Justage der Verdrängerschrauben 7,8 wird der Abschlussflansch 55 auf das Fördergehäuse aufgesetzt. Am Antriebsabschnitt 2 der Pumpe wird die Montageöffnung durch einen Deckel 91 verschlossen. Danach ist die Pumpe 1 einsatzbereit.

### Bezugszeichenliste

1: Pumpe
2: Antriebsabschnitt
3: Produktabschnitt
4: Antriebswellenzapfen
5: Produktzufluss
6: Produktabfluss
7,8: Verdrängerschrauben
9,10: Wellen
11,12: Verschraubungen
13,14: Nadellager
15,16: Schrägkugellager
17: Synchrongetriebe
18,19: Ritzel
20: Ölbad
21,22,23: Wellendichtringe
24,25: Aufnahmebohrungen (Schrägkugellager)
26,27: Außenringe (Schrägkugellager)
28,29: Innenringe (Nadellager)
30,31: Tragkörper
32,33: Innenringe (Schrägkugellager)
34: Gehäuse
35,36: Außenringe (Nadellager)
37,38: Aufnahmebohrungen (Nadellager)
39,40: Zahnkränze
41,42: Nadelkäfige
43: Montageöffnung
44,45: Kugelkäfige
46: Fixierblech
47,48: Anschlagschultern
49,50,51,52: Klemmbleche
53: Zwischenflansch
54: Fördergehäuse
55: Abschlussflansch
56: Ansatzkragen
57: Wandung
58: Leckageraum
59,60: Dichtungssitze
61,62: Gleitringdichtungen
63: stationärer Abschnitt
64,65: rotierende Abschnitte
66,67: Stifte
68,69: Gleitringe
70: Federring
71: Hülse
72: Vorsprung
73: Gleitring
74: Topf
75: Stufe
76: Mitnehmer
77: Produktraum
78: Nut
79,80: Finger
81: Sicherungsblech
82: Ausfräsung
84: Steg 10
85,86: Langlöcher
87: Sicherungsschrauben
88: Lasche
89: Blech
90: Eingreifschutz 15
91: Deckel

## Patentansprüche

1. Rotierende Pumpe mit wenigstens einem angetriebenen Förderelement (7,8), welches in einem vom zu fördernden Produkt durchströmten Produktraum (77) angeordnet ist und mittels einer von außen in den Produktraum (77) hineinragenden Welle (9,10) angetrieben wird, wobei die Welle gegen eine Wandung (57) des Produktraums (77) abgedichtet ist, und wobei die Abdichtung als produktseitig zu montierende Gleitringdichtung (61,62) mit außen liegender formschlüssiger Lagesicherung (81) ausgeführt ist, **dadurch gekennzeichnet, dass** die Lagesicherung (81) eingerichtet ist, um ein Verdrehen der Gleitringdichtung (61,62) sowie ein Verschieben der Gleitringdichtung (61,62) in Richtung des Produktraums (77) zu verhindern.

2. Pumpe nach Anspruch 1, **dadurch gekennzeichnet, dass** die Gleitringdichtung (61,62) einen ersten rotierenden Abschnitt (64), einen zweiten rotierenden Abschnitt (65) sowie einen stationären Abschnitt (63) aufweist.

3. Pumpe nach Anspruch 2, **dadurch gekennzeichnet, dass** der stationäre Abschnitt (63) eine Hülse (71) umfasst, welche in einen Dichtungssitz (59,60) in der Wandung (57) eingesetzt ist.

4. Pumpe nach Anspruch 3, **dadurch gekennzeichnet, dass** die Hülse (71) auf der vom Produktraum (77) abgewandten Seite aus der Wandung (57) herausragt.

5. Pumpe nach Anspruch 4, **dadurch gekennzeichnet, dass** die Hülse an dem aus der Wandung (57) herausragenden Abschnitt eine umlaufende Nut (78) aufweist.

6. Pumpe nach Anspruch 5, **dadurch gekennzeichnet, dass** die Lagesicherung (81) als Sicherungsblech (81) ausgeführt ist, welches die Hülse (71) seitlich umgreift und dabei in die Nut (78) eingreift.

7. Pumpe nach Anspruch 6, **dadurch gekennzeichnet, dass** das Sicherungsblech (81) auf einem Umfangswinkel von mehr als 180° in die Nut (78) eingreift.

8. Pumpe nach Anspruch 6 oder 7, **dadurch gekennzeichnet, dass** das Sicherungsblech (81) seitliche Finger (79,80) aufweist, welche beim Umgreifen der Hülse (71) zunächst elastisch nach außen gebogen werden und anschließend in Richtung ihrer Ruhelage zurückfedern.

9. Pumpe nach einem der Ansprüche 5 bis 8, **dadurch gekennzeichnet, dass** die Hülse (71) eine an die Nut (78) angrenzende Ausfräsung (82) aufweist.

10. Pumpe nach Anspruch 9, **dadurch gekennzeichnet, dass** das Sicherungsblech (81) einen Vorsprung aufweist, welcher als Drehsicherung in die Ausfräsung (82) eingreift.

11. Pumpe nach einem der Ansprüche 6 bis 10, **dadurch gekennzeichnet, dass** das Sicherungsblech (81) in einem Leckageraum (53) zwischen dem Produktraum (77) und einem Antriebsabschnitt (2) der Pumpe angeordnet ist, und dass das Sicherungsblech (81) an einem nicht mit der Hülse (71) zusammenwirkenden Ende umgebogen ist, um einen Eingreifschutz (90) für den Leckageraum bereitzustellen.

12. Pumpe nach einem der Ansprüche 6 bis 11, **dadurch gekennzeichnet, dass** das Sicherungsblech (81) durch eine oder mehrere Sicherungsschrauben (87) fixiert ist.

13. Sicherungsblech (81) einer Pumpe gemäß eines der Ansprüche 6 bis 12.

## Claims

1. Rotating pump having at least one driven conveying element (7, 8) which is arranged in a product space (77), flowed through by the product to be conveyed, and is driven by means of a shaft (9, 10) which protrudes into the product space (77) from the outside, the shaft being sealed with respect to a wall (57) of the product space (77), and the seal being configured as a slide ring seal (61, 62) to be mounted on the product side with an outer positively locking positional securing means (81), **characterized in that** the positional securing means (81) is set up to prevent a turning of the slide ring seal (61, 62) and a displacement of the slide ring seal (61, 62) in the direction of the product space (77).

2. Pump according to Claim 1, **characterized in that** the slide ring seal (61, 62) has a first rotating section (64), a second rotating section (65) and a stationary section (63).

3. Pump according to Claim 2, **characterized in that** the stationary section (63) comprises a sleeve (71) which is inserted into a seal seat (59, 60) in the wall (57) .

4. Pump according to Claim 3, **characterized in that** the sleeve (71) protrudes out of the wall (57) on the side which faces away from the product space (77).

5. Pump according to Claim 4, **characterized in that** the sleeve has a circumferential groove (78) on the section which protrudes out of the wall (57).

6. Pump according to Claim 5, **characterized in that** the positional securing means (81) is configured as a securing plate (81) which engages laterally around the sleeve (71) and in the process engages into the groove (78) .

7. Pump according to Claim 6, **characterized in that** the securing plate (81) engages into the groove (78) on a circumferential angle of more than 180°.

8. Pump according to Claim 6 or 7, **characterized in that** the securing plate (81) has lateral fingers (79, 80) which, when engaging around the sleeve (71), are first of all bent outwards elastically and subsequently spring back in the direction of their rest position.

9. Pump according to one of Claims 5 to 8, **characterized in that** the sleeve (71) has a milled-out section (82) which adjoins the groove (78).

10. Pump according to Claim 9, **characterized in that** the securing plate (81) has a projection which engages as an anti-rotation safeguard into the milled-out section (82).

11. Pump according to one of Claims 6 to 10, **characterized in that** the securing plate (81) is arranged in a leakage space (53) between the product space (77) and a drive section (2) of the pump, and **in that** the securing plate (81) is bent over at an end which does not interact with the sleeve (71), in order to provide a protective hand guard (90) for the leakage space.

12. Pump according to one of Claims 6 to 11, **characterized in that** the securing plate (81) is fixed by way of one or more securing bolts (87).

13. Securing plate (81) of a pump according to one of Claims 6 to 12.

## Revendications

1. Pompe rotative comprenant au moins un élément de refoulement entraîné (7, 8) qui est disposé dans un espace produit (77) parcouru par un produit à refouler et qui est entraîné au moyen d'un arbre (9, 10) pénétrant depuis l'extérieur dans l'espace produit (77), l'arbre étant étanchéifié par rapport à une paroi (57) de l'espace produit (77), et l'étanchéité étant réalisée sous forme de joint d'étanchéité à bague de glissement (61, 62) devant être monté du côté du produit, avec une fixation en position (81) par engagement par correspondance de formes, située à l'extérieur, **caractérisée en ce que** la fixation en position (81) est prévue pour empêcher une rotation du joint d'étanchéité à bague de glissement (61, 62) ainsi qu'un déplacement du joint d'étanchéité à bague de glissement (61, 62) dans la direction de l'espace produit (77).

2. Pompe selon la revendication 1, **caractérisée en ce que** le joint d'étanchéité à bague de glissement (61, 62) présente une première portion rotative (64), une deuxième portion rotative (65) ainsi qu'une portion stationnaire (63).

3. Pompe selon la revendication 2, **caractérisée en ce que** la portion stationnaire (63) comprend une douille (71) qui est insérée dans un siège d'étanchéité (59, 60) dans la paroi (57).

4. Pompe selon la revendication 3, **caractérisée en ce que** la douille (71) fait saillie du côté opposé à l'espace produit (77) hors de la paroi (57).

5. Pompe selon la revendication 4, **caractérisée en ce que** la douille présente une rainure périphérique (78) au niveau de la portion faisant saillie hors de la paroi (57).

6. Pompe selon la revendication 5, **caractérisée en ce que** la fixation en position (81) est réalisée sous forme de tôle de fixation (81) qui vient en prise latéralement autour de la douille (71) et qui s'engage ainsi dans la rainure (78).

7. Pompe selon la revendication 6, **caractérisée en ce que** la tôle de fixation (81) s'engage dans la rainure (78) sur un angle périphérique supérieur à 180°.

8. Pompe selon la revendication 6 ou 7, **caractérisée en ce que** la tôle de fixation (81) présente des doigts latéraux (79, 80) qui, lors de l'engagement autour de la douille (71), sont d'abord courbés élastiquement vers l'extérieur puis reviennent élastiquement dans la direction de leur position de repos.

9. Pompe selon l'une quelconque des revendications 5 à 8, **caractérisée en ce que** la douille (71) présente un fraisage (82) adjacent à la rainure (78) .

10. Pompe selon la revendication 9, **caractérisée en ce que** la tôle de fixation (81) présente une saillie qui vient en prise en tant que fixation en rotation dans le fraisage (82).

11. Pompe selon l'une quelconque des revendications 6 à 10, **caractérisée en ce que** la tôle de fixation (81) est disposée dans un espace de fuite (53) entre l'espace produit (77) et une portion d'entraînement (2) de la pompe, et **en ce que** la tôle de fixation (81) est cintrée au niveau d'une extrémité ne coopérant pas avec la douille (71), afin de fournir une protection d'engagement (90) pour l'espace de fuite.

12. Pompe selon l'une quelconque des revendications 6 à 11, **caractérisée en ce que** la tôle de fixation (81) est fixée par une ou plusieurs vis de fixation (87).

13. Tôle de fixation (81) d'une pompe selon l'une quelconque des revendications 6 à 12.
